# EUROPEAN PATENT APPLICATION

(11) **EP 2 947 823 A1**
(43) Date of publication of application: **25.11.2015**
(21) Application number: 14305765.1
(22) Date of filing: 23.05.2014
(51) Int. Cl.: H04L 12/28, H04L 29/08, H04W 4/20, H04W 4/06

(54) **Publish/subscribe network for controlling an application using another device**

(71) Applicant: Thomson Licensing, 92130 Issy-les-Moulineaux (FR)
(72) Inventor: Verbeeck, Kris, 1981 Hofstade (BE); Billiet, Tom, 2630 Aartselaar (BE)
(74) Representative: Arnold, Klaus-Peter

(57) **Abstract**

The publish/subscribe network (N) comprises at least a first and a second device (I1-I4, T1), wherein the second device (T1) comprises a second application including a control code receiving program (PR1), and the first device (I1-I4) is configured as an input device and includes a first application with a control code generating program (PG1, PG2) for controlling the second application of the second device (T1) via publish/subscribe messages.

## Description

### TECHNICAL FIELD

The invention relates to the field of communications networks, in particular to a network including an access gateway.

### BACKGROUND OF THE INVENTION

Access gateways are widely used to connect devices in the home or in a company to the Internet or any other wide area network (WAN). Access gateways use in particular digital subscriber line (DSL) technology that enables a high data rate transmission over copper lines or optical transmission for Internet services. Access gateways including wireless technology have a key role in today's home and professional environments. A mechanism for connecting wireless devices to a local area network (LAN) is called Wi-Fi, which is a brand name of the Wi-Fi Alliance for devices using the IEEE 802.11 family of standards for wireless data transmission.

Home networks have become part of everyday life for many customers. A home network consists of a range of heterogeneous devices, which means that the home network is made up of different kinds of devices. All these devices need to communicate with each other. For this interconnection, multiple solutions are available: The home network uses a mixture of solutions, such as wireless and wired network connections. Combining these devices creates a network that allows users to share information and control devices in the home. Examples of networked devices in the home are for example residential gateways, set-top boxes, TVs, personal computers, tablet PCs, smart phones, network-attached storage (NAS) devices, printers and game consoles.

In software architecture, Publish/Subscribe is a messaging pattern where senders of messages, called publishers, do not program the messages to be sent directly to specific receivers, called subscribers. Instead, published data is multicasted, without knowledge of what, if any, subscribers there may be. Similarly, subscribers subscribe to particular data, and only receive messages that are of interest, without knowledge of what, if any, publishers there are. Entities connected to a Publish/Subscribe-based network communicate on 'Topics' and value changes of its parameters that are published, to the ones subscribed.

DDS (Data Distribution Service for Real-Time Systems) is a standard governed by the Object Management Group (OMG). It describes a data-centric publish-subscribe middleware that can be used to build distributed real-time systems. Since its formal adoption as an OMG standard in the year 2004, it has become a popular technology used in many different industries such as the airline/aviation industry, the automotive industry, the military, etc. Several commercial and open-source implementations of the DDS standard exist.

US 8,429,309 discloses a method for providing input in a home network using Universal Plug and Play (UPnP). A control point sends a request for information about input capabilities to an electronic device existing in the home network, and receives the information about the input capabilities in response to the request. The control point acts in an embodiment as a remote control transmitting a control code generated by a key code processor.

US 6,976,216 describes a computer system related to the use of dedicated audio/video control keys on computing devices that execute programs for playing an audio or video work on the computer system.

### SUMMARY OF THE INVENTION

The publish/subscribe network comprises at least a first and a second device, wherein the second device comprises a second application including a control code receiving program and the first device is configured as an input device and includes a first application with a control code generating program for controlling the second application of the second device via publish/subscribe messages. The first device includes in particular a user interface for generating a control command, which is transformed by the control code generating program into a control code for controlling the second application.

In an aspect of the invention, the first and the second applications are a part of a network operating application included in each of the devices for sending and receiving the publish/subscribe messages via an access gateway. The network operating application is configured as an execution environment on top of an operating system of each device and utilizes for example a Data Distribution Service for Real-Time Systems (DDS), according to which the user interfaces act as Domain Participants of the publish/subscribe network for controlling the second application via publish/subscribe messages being configured as topics.

In a preferred embodiment, the publish/subscribe network is a secured home network and the devices are Internet-enabled devices. For example, the first device is a mobile device and the second device is a personal computer, a notebook or a computer game console. The publish/subscribe network comprises in particular an access gateway and the publish/subscribe messages of the first device are transmitted to the second device via the access gateway according to a wireless standard, e.g. a Wi-Fi standard. The second application is for example an educational program or a computer game.

### BRIEF DESCRIPTION OF THE DRAWINGS

Preferred embodiments of the invention are explained in more detail below by way of example with reference to schematic drawings, which show:
- Fig. 1: a publish/subscribe home network including a multitude of input devices and a target device, and
- Fig. 2: an embodiment of the home network of figure 1 comprising two input devices and one target device.

### DETAILED DESCRIPTION OF PREFERRED EMBODIMENTS

In the following description, a publish/subscribe network comprising at least a first and a second device is described, wherein the first device is configured as an input device and the second device as a target device. For purposes of explanation, numerous specific details are set forth in order to provide a thorough understanding of the embodiments. It will be evident, however, to one skilled in the art that the present invention may be practiced without these specific details.

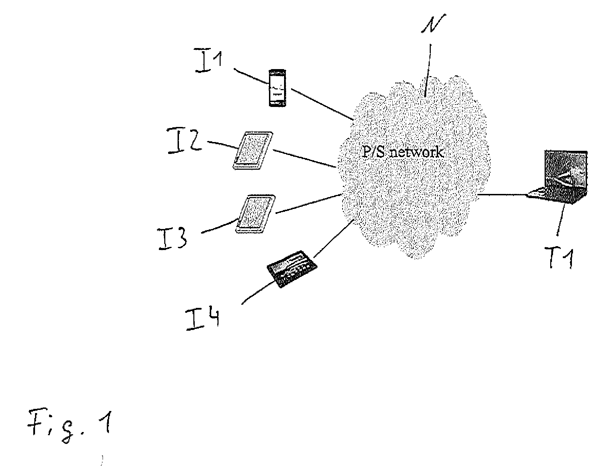

The publish/subscribe network is for example a home network N including a multitude of input devices I1-I4 and a target device T1, as depicted in figure 1. The input devices I1-I4 are each controlled by a user and are enabled to communicate with the target device T1 via publish/subscribe messages, by using a first application with a control code generating program within each of the input devices I1-I4 and a second application including a control code receiving program within the target device T1. The home network N is in particular a secured home network and the devices I1-I4 and T1 are Internet-enabled devices.

The input devices I1-I4 each include a user interface allowing a user to input a control command, which is converted by the control code generating program of the respective input device into a control code being sent via a publish/subscribe message to the home network N. The application of the target device T1 subscribes to this message and the control code receiving program of the target device T1 converts the control code as received with the public subscribe message into a control command for controlling the second application of the target device T1.

The target device T1 is for example a laptop, a personal computer or a game console and the input devices I1-I4 can be any Internet enabled device comprising an IP Internet address and an Ethernet MAC address, for example mobile devices like a tablet PC or a smartphone. The second application running on the target device is for example an educational program or a computer game, and the first application running on each of the input devices I1-I4 is a control program for controlling the second application of the target device T1.

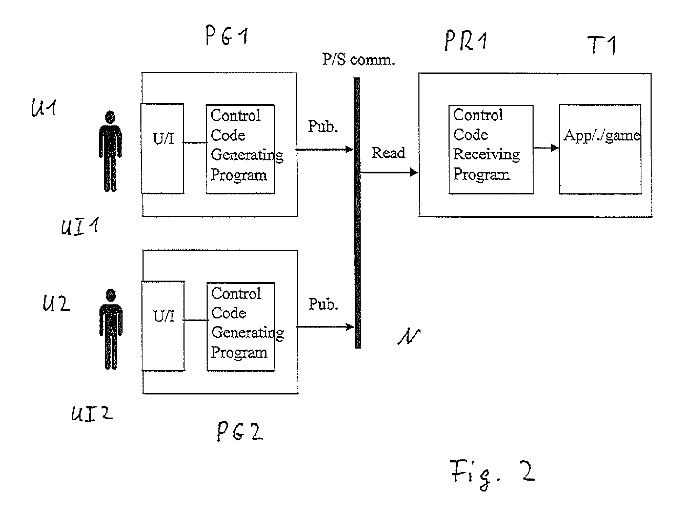

An embodiment of a publish/subscribe network N including two input devices I1, 12 and a target device T1 is illustrated in figure 2. The input device I1 includes a user interface UI1 and a control code generating program PG1 and the input device 12 includes a user interface UI2 and a control code generating program PG2. The application of the target device T1 includes a control code receiving program PR1 for controlling the application of the target device T1, which is for example a car racing game. The publish/subscribe network N is for example a wireless home network including a residential gateway for connecting the input devices I1, 12 with the target device T1.

The car racing game is played by two users U1, U2, user U1 using the input device UI1 and user U2 using the input device UI2 for controlling each a car of the car racing game. The users U1, U2 use their respective user interface UI1, UI2 to input control commands for controlling the computer game running on the target device D1. The user interfaces UI1, UI2 include for example each a keyboard with respective keys and/or acceleration sensors, as included in present smartphones and tablet PCs. The user U1 uses for example arrow keys "arrow up" and "arrow down" for acceleration: speed up, speed down, and keys "left arrow" and "right arrow" for direction control: left direction and right direction of a first car of the computer game. The user U2 uses respective arrow keys of the user interface UI2 for controlling a second car of the computer game.

Instead of the arrow keys, alternatively, acceleration sensors are used as the user interfaces UI1, UI2 for controlling the application of the target device T1: for example tilting the input devices I1, 12 to the left or right side to steer a respective car of the car racing game to the left side or right side, and tilting the input devices I1, 12 forward or backward to control the acceleration or deceleration of the respective car.

The control commands inputted by the users U1, U2 on the respective user interface UI1, UI2 are converted by the control code generating program PG1, respectively PG2, into control codes and published via messages to the publish/subscribe network N. The application of the target device T1 including the control code receiving program PR1 has subscribed to the messages of the control code generating programs PG1, PG2 to receive the control codes from the input devices I1, 12.

The control code receiving program PR1 is constantly checking for respective messages which are sent by the publish/subscribe network N immediately to the target device T1, and the car racing game reacts on the control commands of the users U1, U2 as if a respective key was actually pressed, without any recognizable delay for the users U1, U2. By using publish/subscribe messages for communication of the input devices I1, 12 with the target device T1, the control commands of the users U1, U2 reach directly via subscription the target device T1 for achieving the appropriate actions.

For example, the users U1, U2 simply select each one car as offered by the car racing program after starting-up of the car racing game, and no further connection channel needs to be setup between the input devices I1, 12 and the target device T1. By using the publish/subscribe mechanism of the publish/subscribe network N, any further input device can be easily added to the publish/subscribe network N for controlling the application of the target device T1. It is only required to install the first application on the new input device, and when starting the first application on the new input device, the new input device obtains immediately control over the second application running on the target device T1 by publishing respective messages. The new input device can be any Internet enabled device being connected to the publish/subscribe network N.

In a preferred embodiment, the first and the second applications are a part of a network operating application included in each of the devices I1-I4, T1 for sending and receiving the publish/subscribe messages via an access gateway. The network operating application is configured as an execution environment on top of an operating system of each device and utilizes for example a Data Distribution Service for Real-Time Systems (DDS), according to which the user interfaces act as Domain Participants of the publish/subscribe network for controlling the second application via publish/subscribe messages being configured as topics.

In a further aspect of the invention, the network operating application including the first application with the control code generating program and the second application with the control code receiving program are stored on a computer readable storage medium.

Also other embodiments of the invention may be utilized by one skilled in the art without departing from the scope of the present invention. The publish/subscribe network N is in a preferred embodiment a publish/subscribe network using DDS for sending and receiving the publish/subscribe messages, but also other topic-based publish/subscribe methods, e.g. D-Bus, may be used according to the invention. The invention resides therefore in the claims herein after appended.

## Claims

1. A publish/subscribe network (N) comprising at least a
first and a second device (I1-I4, T1), wherein
the second device (T1) comprises a second application including a control code receiving program (PR1), and
the first device (I1-I4) is configured as an input device and includes a first application with a control code generating program (PG1, PG2) for controlling the second application of the second device (T1) via publish/subscribe messages.

2. The publish/subscribe network of claim 1, wherein the first device (I1-I4) includes a user interface (UI1, UI2) for generating a control command, which is transformed by the control code generating program (PG1, PG2) into a control code for controlling the second application.

3. The publish/subscribe network of claim 2, wherein the first and the second applications are a part of a network operating application included in each of the devices (I1-14, T1) for sending and receiving the publish/subscribe messages via an access gateway.

4. The publish/subscribe network of claim 3, wherein the network operating application utilizes a Data Distribution Service for Real-Time Systems (DDS) and the user interfaces (UI1, UI2) act as Domain Participants of the DDS network for controlling the second application via publish/subscribe messages.

5. The publish/subscribe network of one of the preceding claims, wherein the application is an educational program or a computer game.

6. The publish/subscribe network of one of the preceding claims, wherein the first device (I1-I4) is a mobile device and the second device (T1) is a personal computer, a notebook or a computer game console.

7. The publish/subscribe network of one of the preceding claims, wherein the network (N) is a secured home network and the devices (I1-I4, T1) are Internet-enabled devices.

8. The publish/subscribe network of one of the preceding claims, wherein the publish/subscribe network comprises (N) an access gateway and wherein the publish/subscribe message of the first device (I1-I4) is transmitted to the second device (T1) via the access gateway according to a Wi-Fi standard.

9. Computer readable storage medium including a first application with a control code generating program and a second application including a control code receiving program for a publish/subscribe network according to claim 1.

10. A device (I1-I4) comprising a first application with a control code generating program (PG1, PG2) for a publish/subscribe network according to claim 1.

11. A device (T1) comprising a second application including a control code receiving program (PR1) for a publish/subscribe network according to claim 1.
